# EUROPÄISCHE PATENTSCHRIFT

(11) **EP 1 844 732 B1**
(45) Veröffentlichungstag und Bekanntmachung des Hinweises auf die Patenterteilung: **14.03.2012**
(21) Anmeldenummer: 07011252.9
(22) Anmeldetag: 14.03.2001
(51) Int. Cl.: A61C 17/22

(54) **Vorrichtung zur Zahnreinigung mit einem Handteil und einem ankuppelbaren Putzwerkzeug, die beide zur Sendung und zum Empfang von Daten angepasst sind**
Device for cleaning teeth comprising a hand part and an attachable cleaning tool both adapted for sending and receiving data
Dispositif pour nettoyer les dents comprenant une pièce à main et un instrument de nettoyage attachable adaptés pour envoyer et recevoir des données

(43) Veröffentlichungstag der Anmeldung: 17.10.2007
(62) Teilanmeldung aus: 01931519.1
(73) Patentinhaber: Braun GmbH, 61476 Kronberg (DE)
(72) Erfinder: Hilscher, Alexander, 61462 Königstein (DE); Reick, Hansjörg, 61449 Steinbach (DE); Stratmann, Martin, 60318 Frankfurt (DE); Trawinski, Peter, 64331 Weiterstadt (DE); Vorbeck, Wolfgang, 65510 Idstein-Eschenhahn (DE); Schwarz-Hartmann, Armin, 55234 Wendelsheim (DE); Mannebach, Horst, 56294 Münstermaifeld (DE)

(56) Entgegenhaltungen:
- US-B1- 6 193 510

## Beschreibung

Die vorliegende Erfindung betrifft eine Vorrichtung zur Zahnreinigung in Form einer elektrischen Zahnputzvorrichtung, an deren Handteil verschiedene Putzwerkzeuge für die individuelle Zahnreinigung der Benutzer der Zahnputzvorrichtung angekuppelt werden. Die Erfindung betrifft ferner das Handteil einer elektrischen Zahnputzvorrichtung, insbesondere - bürste, das ein Kupplungsteil zum Ankuppeln verschiedener Putzwerkzeuge, einen Antrieb zum Antreiben des jeweils angekuppelten Putzwerkzeugs, sowie eine Steuereinrichtung besitzt. Auch betrifft die Erfindung die Putzwerkzeuge, insbesondere Aufsteckbürsten für ein solches Handteil.

Ein Handteil nach dem Oberbegriff des Anspruchs 1 und ein Putzwerkzeug nach dem Oberbegriff des Anspruchs 5 sind bereits aus der US 6193510 B1 bekannt. Diese Druckschrift befaßt sich mit einer Vorrichtung zur Beaufschlagung von dentalem Füllmaterial zum Ausbessern der Zähne mit das Füllmaterial aushärtendem Licht. Insoweit ist ein austauschbarer Lichtleiter vorgesehen, der auf ein Handstück aufsetzbar ist und mit dem die zu behandelnden Bereiche des mit Füllmaterial versehenen Zahnes mit Licht beaufschlagt werden, um das Aushärten der Füllmasse zu beschleunigen. Derartige austauschbare Lichtleiter sind nur ungenügend zu sterilisieren, so daß die Notwendigkeit besteht, dem Benutzer dieser Vorrichtung mitzuteilen, daß der austauschbare Lichtleiter ersetzt werden soll. Hierzu ist auf dem austauschbaren Lichtleiter ein Barcode vorgesehen, der beim Aufstecken des Lichtleiters auf das Handstück von dem Lesegerät am Handstück detektiert wird. Handelt es sich um einen erstmals erfaßten neuen Code, so wird ein Timer aktiviert, der dann die Benutzungszeiten dieses mit dem neuen Code versehenen Lichtleiters aufaddiert und nach der maximalen Benutzungszeit das Handstück ausschaltet. Das Handstück läßt sich erst dann wieder einschalten, wenn ein weiterer austauschbarer Lichtleiter mit einem anderen neuen Code eingesetzt wird. Wird ein Lichtleiter mit einem bereits vorher erfaßten Code erneut auf das Handstück gesteckt, wird überprüft, ob die zulässige Benutzungszeit bereits erreicht ist oder nicht. Sofern die zulässige maximale Benutzungszeit noch nicht erreicht ist, kann das Gerät solange mit diesem Lichtleiter weiter betrieben werden, bis die maximal vorgegebene Benutzungszeit erreicht ist, wonach dann erneut das Handstück in den Aus-Zustand versetzt wird. Grundgedanke der Vorrichtung nach der US 6193510 B1 ist es also, die Nutzungszeitdauer des mit dem Benutzer in Kontakt kommenden austauschbaren Element zu messen und aufzuaddieren, um nach Ablauf einer maximalen Benutzungszeitdauer zu signalisieren, daß das Element auszutauschen ist. Weiterhin finden sich in dieser Druckschrift auch Hinweise, daß ähnliche Überlegungen auf andere medizinische Geräte mit austauschbaren benutzerspezifischen Elementen Anwendung finden. Als Beispiel sind elektrische Zahnbürsten und Mundduschendüsen erwähnt.

Zahnputzvorrichtungen wie elektrische Zahnbürsten oder elektrische Mundduschen besitzen in der Regel ein Griffstück bzw. ein Handteil, auf dem verschiedene Putzwerkzeuge wie Aufsteckbürsten aufsteckbar sind, so daß mehrere Benutzer mit jeweils personenbezogenen Putzwerkzeugen die Zahnputzvorrichtung nutzen können. Solche elektrischen Zahnbürsten sind zum Beispiel aus der DE 19627752 A1 oder der EP 0624079 B1 bekannt. Um die Zahnreinigung den Wünschen und Bedürfnissen der Benutzer anzupassen, kann der jeweilige Benutzer Zahnreinigungsparameter wie zum Beispiel die Stärke des Wasserstrahls bei Mundduschen oder die Geschwindigkeit der Aufsteckbürsten elektrischer Zahnbürsten individuell einstellen.

Aus der DE 299 15 858 U1 ist eine Zahnputzvorrichtung bekannt, bei der jede der verschiedenen Zahnbürsten nur jeweils an einer bestimmten Einstecköffnung einer Konsole angeschlossen werden kann. Dadurch läuft dann das für diese spezielle Zahnbürste vorgesehene Programm ab. Allerdings ist es insbesondere für Kinder mühsam, die für die personenbezogene Zahnbürste vorgesehene individuelle Einstecköffnung zu finden und den Stecker dort zu adaptieren. Außerdem ist diese Konsole herstellungstechnisch sehr aufwendig, da zum einen eine Vielzahl unterschiedlicher Einstecköffnungen vorzusehen sind, wobei auch jede der Zahnbürsten einen unterschiedlichen, der jeweiligen Einstecköffnung zugeordneten Stecker aufzuweisen hat.

Bei einer weiteren Vorrichtung nach US 5184959 ist jeder Handzahnbürste in einer Konsole ein eigener Einsteckschlitz zugeordnet, so daß jeder Zahnbürste durch die Konsole ein individuelles Putzzeitsignal zugeordnet werden kann. Diese Anordnung ist herstellungstechnisch sehr aufwendig, wobei benutzerspezifische Daten des Zahnputzvorganges nicht erfaßt und gespeichert werden können.

Solche Zahnputzvorrichtungen sind in mehrerer Hinsicht verbesserungsfähig. Insbesondere ist es wünschenswert, die mögliche Anpassung an die Benutzer sowie die Benutzerfreundlichkeit weiter zu verbessern.

Der vorliegenden Erfindung liegt daher die Aufgabe zugrunde, eine verbesserte Vorrichtung zur Reinigung von Zähnen, ein verbessertes Handteil einer elektrischen Zahnputzvorrichtung und/oder verbesserte Putzwerkzeuge hierfür zu schaffen, die die Zahnreinigung gegenüber dem Stand der Technik weiterbilden und weitere Vorteile erzielen. Insbesondere soll die Anpassung an die verschiedenen Benutzer sowie die Benutzerfreundlichkeit weiter verbessert werden.

Hinsichtlich der vorrichtungstechnischen Aspekte wird die genannte Aufgabe bei einem Handteil einer elektrischen Zahnputzvorrichtung der eingangs genannten Art erfindungsgemäß im wesentlichen dadurch gelöst, daß das Handteil eine Steuereinrichtung zur Steuerung zumindest eines Zahnreinigungsparameters der Zahnputzvorrichtung in Abhängigkeit der erfaßten Codierung und eine Spule aufweist, die als Sende- und Empfangsteil dient. Hinsichtlich des Putzwerkzeugs der eingangs genannten Art wird die Aufgabe im wesentlichen gelöst durch die Merkmale des Anspruchs 5. Bevorzugte Ausgestaltungen der Erfindung in vorrichtungstechnischer Hinsicht sind ebenfalls Gegenstand abhängiger Ansprüche.

Das Handteil erfaßt also das gerade aufgesetzte Putzwerkzeug und steuert in Abhängigkeit des erfaßten Putzwerkzeugs eine oder vorzugsweise mehrere Funktionen der Zahnputzvorrichtung. Insbesondere kann die Steuereinrichtung des Handteils, unter der an sich selbstverständlichen Annahme, daß jeder Benutzer des Handteils sein personenbezogenes Putzwerkzeug benutzt, anhand der erfaßten Putzwerkzeugcodierung selbsttätig feststellen, welcher der Benutzer die Zahnputzvorrichtung gerade benutzt. Es ist keine Eingabe seitens des Benutzers wie zum Beispiel ein Knopfdruck und dergleichen notwendig, um der Zahnputzvorrichtung mitzuteilen, wer sie benutzt. Es kann somit auch eine automatische Anpassung an den jeweiligen Benutzer erfolgen. Hierdurch wird ein Höchstmaß an Benutzerfreundlichkeit erzielt. Dabei werden mittels der Steuereinrichtung Betriebsparameter wie Putzfrequenz, -geschwindigkeit und -zeit bzw. Anpreßdruckschwellwert oder -sollwertbereich automatisch an den jeweils erfaßten Benutzer angepaßt. Es können verschiedene Benutzerprofile eingestellt und abgespeichert werden, von denen eines von der Steuervorrichtung zur Anwendung gebracht wird, nachdem zu Beginn des Putzvorgangs die Codierung des gerade verwendeten Putzwerkzeugs erfaßt und damit der jeweilige Benutzer bestimmt worden ist. Die Codierungs-Erkennungseinrichtung gibt hierzu ein entsprechendes Signal an die Steuereinrichtung. Bei elektrischen Zahnbürsten kann die Motordrehzahl beispielsweise bei einem Kind als Benutzer gegenüber der sonst für Erwachsene üblichen Drehzahl reduziert werden, so daß für das Kind eine schonendere Zahnreinigung durchgeführt wird. Die Steuervorrichtung kann ferner in Abhängigkeit eines Signals der Codierungs-Erfassungseinrichtung die Zeitdauer eines Timers je nach dem erfaßten Benutzer variieren, beispielsweise bei Kindern auf zwei Minuten und bei Erwachsenen auf drei Minuten einstellen. Auch könnte die Art der Signalgebung des Timers modifiziert werden und beispielsweise bei Kindern als Melodie und bei Erwachsenen als Summton eingestellt werden.

In Weiterbildung der Erfindung können auch benutzerspezifische Daten wie Putzfrequenz, -geschwindigkeit, -zeit, Zeitspanne zwischen Putzvorgängen, oder Anpreßdruck automatisch in Abhängigkeit eines entsprechenden Signals der Erkennungseinrichtung benutzerspezifisch gespeichert, verarbeitet und beispielsweise an einem Display angezeigt werden. Auch hierdurch wird ein erhöhter Bedienungskomfort erreicht.

Der jeweilige Benutzer wird also mittelbar anhand des verwendeten Putzwerkzeugs bzw. dessen Codierung von dem Handteil erfaßt bzw. bestimmt, da jedem Benutzer ein oder mehrere eigene, individuelle Putzwerkzeuge fest zugeordnet sind. Hierzu können die Putzwerkzeuge, die ansonsten identisch ausgebildet sein können, benutzerspezifische Codierungsmittel aufweisen.

Es kann auch eine spezifische Funktionssteuerung in Abhängigkeit des verwendeten Putzwerkzeugtyps vorgesehen sein. Z.B. können Betriebsparameter des Handteils automatisch verändert werden, wenn eine Aufsteckbürste mit bestimmten Eigenschaften, wie große Härte oder geringe Härte verwendet wird. Ebenso kann ein anderes Betriebsprogramm aufgerufen werden, wenn ein Putzwerkzeug eines anderen Typs wie z.B. Interdentalreiniger, Zahnfleischmassierer oder Zungenschaber auf das Handteil aufgesetzt ist. Je nach individuellem Putzwerkzeug und/oder Benutzer können die Drehzahl, Sollputzdauer, Antriebsbewegung, Putzfrequenz, -geschwindigkeit, Anpreßdruckschwellenwert etc. angepaßt werden.

Ferner kann durch die Erkennung eines individuellen Putzwerkzeuges dessen Abnutzungsgrad bestimmt werden, z.B durch Ermitteln und Auswerten der Benutzungszeit bzw. Putzzeitdauer dieses Putzwerkzeugs. Bei Putzwerkzeugen mit chemischen Zusatzstoffen kann durch den in der Codierung versteckten Herstellzeitpunkt deren Verfallszeit erkannt werden. Vorgegebene Reinigungs- oder Wartungsintervalle können ebenfalls angezeigt werden.

Die Erfassung der unmittelbar an den Putzwerkzeugen vorgesehenen Codierungen sowie die Codierungen der Putzwerkzeuge können in verschiedener Weise erfolgen.

Nach der Erfindung ist die Codierungs-Erfassungseinrichtung berührungslos arbeitend ausgebildet. Hierdurch wird der Vorteil erreicht, daß Störungen durch Verschmutzung von Kontaktflächen oder Verschleiß durch häufiges Aufstecken und Abnehmen vermieden wird.

Gemäß der Erfindung weist das Handteil einen Signalempfänger der Nehmer zum Empfang eines codierten Signals von dem Putzwerkzeug auf. Das Handteil besitzt darüber hinaus einen Signalsender oder Geber mit dem ein Abfrage- bzw. Aktivierungssignal an das Putzwerkzeug gesandt wird, das daraufhin das codierte Signal zurücksendet. Die Abgabe des codierten Signals von dem Putzwerkzeug erfolgt aktiv durch einen entsprechenden Signalsender .

Gemäß der Erfindung ist eine elektrisch arbeitende Erfassungs-Einrichtung zur Erfassung einer elektrischen Codierung des jeweils angekoppelten Putzwerkzeugs vorgesehen. Das Putzwerkzeug sendet ein codiertes elektrisches Signal an das Handteil bzw. an einen daran vorgesehenen Signalempfänger, so daß der jeweilige Benutzer bzw. das jeweilige Putzwerkzeug erkannt werden kann. Es kann auch zunächst ein Abfragesignal von dem Handteil an das Putzwerkzeug gesandt werden, das von dem Putzwerkzeug codiert und anschließend zurückgesandt wird.

Gemäß der Erfindung ist eine Funkeinrichtung zur Erkennung des jeweils aufgesteckten Putzwerkzeugs mittels elektromagnetischer Wellen vorgesehen, wobei dem Putzwerkzeug ein Transponder zugeordnet ist. Das Handteil sendet zunächst elektromagnetische Wellen aus, um den Transponder mit Energie zu versorgen. Dieser speichert die Energie und sendet eine individuelle Kennung an einen Detektor in dem Handteil zurück, der diese erkennt und dementsprechend den jeweiligen Benutzer bzw. das Putzwerkzeug identifiziert. Das Putzwerkzeug zeichnet sich also dadurch aus, daß eine elektromagnetische Codiereinrichtung vorgesehen ist. Ferner zeichnet es sich dadurch aus, daß ein Signalempfänger zum Empfang eines Signals von den Handteil und ein Signalsender zum Senden eines codierten Signals an das Handteil vorgesehen sind, wobei zwischen den Signalempfänger und den Signalsender eine Codiereinrichtung zur Codierung des empfangenen Signals geschaltet ist.

Vorzugsweise ist die Codiereinrichtung als integriertes Bauteil des Putzwerkzeuges ausgebildet. Sie kann aber auch als separates Bauteil von dem restlichen Teil des Putzwerkzeugs abgenommen bzw. ausgetauscht werden. Hierdurch wird der Vorteil erreicht, daß das Putzwerkzeug an sich nur in einer Form gefertigt werden muß. Durch Anbringen der separaten Codiereinrichtung werden die Putzwerkzeuge individuell codiert und können einem bestimmten Benutzer zugeordnet werden.

Vorzugsweise ist die Codiereinrichtung im Bereich der Verbindung des Putzwerkzeugs zu dem Handteil angeordnet. Hierdurch wird das Lesen der Codierung durch die Erkennungs-Einrichtung an dem Handteil erleichtert. Insbesondere kann die Codiereinrichtung in einen Ring integriert sein, der an der handteilseitigen Stirnseite des Putzwerkzeugs angeordnet, insbesondere formschlüssig aufgeschnappt sein kann.

Zusammengefaßt wird durch die Erfindung eine elektromotorische Zahnbürste, bestehend aus einem Handstück und ein oder mehreren benutzerspezifischen Aufsteckteilen, z. B. Aufsteckbürsten oder dergleichen, zur Verfügung gestellt, wobei eine Kommunikation zwischen Handstück und dem auf das Handstück aufgesteckten Bürstenteil stattfindet. Die Bürstenteile oder Reinigungswerkzeuge können unterschiedlich ausgebildet sein, z. B. als Kinderzahnbürste mit weicheren Borsten, Erwachsenenzahnbürste mit härteren Borsten, Interdentalbürste oder dergleichen, wobei jede dieser gegebenenfalls konstruktiv unterschiedlichen Reinigungswerkzeuge für spezielle Einsatzzwecke jeweils auch einem bestimmten Benutzer zugeordnet sind. Es wird also ein von jedem Benutzer verwendbares Handstück zur Verfügung gestellt, auf das dann benutzerspezifische gleiche oder unterschiedlich ausgebildete Reinigungswerkzeuge aufgesteckt werden, um die Zahnpflege bzw. Zahnreinigung bei dem jeweiligen Benutzer mittels des oder der benutzerspezifischen Reinigungswerkzeuge durchführen zu können. Die Reinigungswerkzeuge weisen einen Geber bzw. eine Codierung auf, die mit einem Nehmer oder einer Codierungs-Erfassungseinrichtung im Handstück kommunizieren. Somit kann über eine entsprechende Ausgestaltung des oder der Geber bzw. Codiereinrichtung im Reinigungswerkzeug dem Handstück über die Kommunikation der Codiereinrichtung mit der Codierungs-Erfassungseinrichtung mitgeteilt werden, welches personenspezifische Reinigungswerkzeug, sei es nun ein Interdentalreinigungswerkzeug, eine Zahnbürste oder ein sonstiges Reinigungswerkzeug, gerade dem Handstück aufgesteckt ist.

Durch diese Möglichkeit der Erfassung der personenspezifischen bzw. reinigungswerkzeugspezifischen Daten des jeweils auf das Handstück aufgesetzten Reinigungswerkzeuges ist die Voraussetzung dafür geschaffen, daß das Handstück personen- oder reinigungswerkzeugspezifisch das jeweils aufgesteckte Reinigungswerkzeug betreiben kann. So können beispielsweise die Putzzeitdauer, die Putzgeschwindigkeit oder dergleichen putzspezifische Parameter personen- und reinigungswerkzeugspezifisch mittels des Handstückes eingestellt werden. Weiterhin ist es auch möglich, personen- bzw. reinigungswerkzeugspezifische Daten bezüglich des Reinigungsvorganges zu erfassen, die beispielsweise in benutzer- bzw. reinigungswerkzeugspezifischen Speichern des Handstücks abgelegt bzw. zur Anzeige gebracht werden können.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnung.

Es zeigen:
- Figur 1: eine perspektivische Darstellung einer elektrischen Zahnbürste mit einem Handteil und einer auf dieses aufsteckbaren Aufsteckbürste,
- Figur 2: eine schematische Längsschnittansicht des Handteils der elektrischen Zahnbürste aus Figur 1, die dessen Gehäuse, den darin angeordneten Antriebsmotor mit Getriebe und Antriebswelle, den Akku für den Antriebsmotor sowie das Lademodul für den Akku zeigt,
- Figur 3: eine schematische Darstellung einer elektrischen Zahnbürste mit einer elektromagnetisch codierten Aufsteckbürste mit aufgeklebtem Transponder und einer entsprechenden Erfassungseinrichtung im Handteil gemäß der Erfindung,
- Figur 4: eine perspektivische Ansicht der Zahnbürste aus Figur 3,
- Figur 5: eine auschnittsweise Schnittansicht einer Zahnbürste ähnlich Figur 3 und 4, die die Anordnung eines Transponderchips in einem stirnseitigen Codierring der Aufsteckbürste sowie einer Sende- und Empfangsspule nebst zugehöriger Auswerteelektronik im Handteil zeigt, wobei die Aufsteckbürste auf das Handteil gesteckt ist.

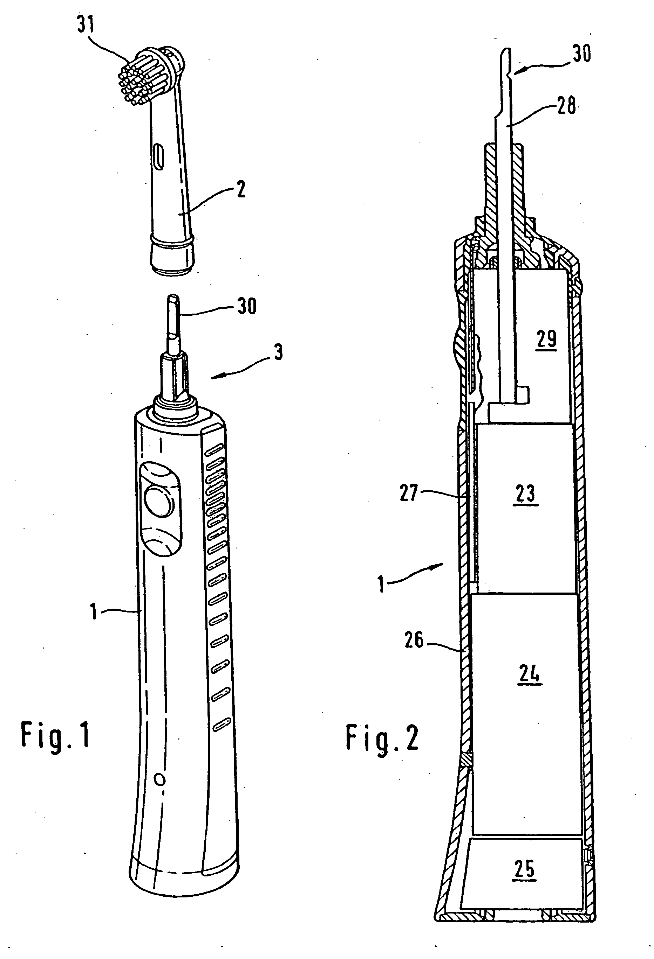

Die in den Figuren gezeigte elektrische Zahnbürste besitzt ein Handteil 1 mit einem geschlossenen Gehäuse 26, in dem unter anderem, wie in Figur 2 dargestellt, in an sich bekannter Weise ein Elektromotor 23, ein Akku 24, der über ein bodenseitig angeordnetes Lademodul 25 an eine Ladestation ankoppelbar ist, sowie eine Steuereinrichtung 27, die eine Leiterplatte bzw. einen Mikroprozessor besitzen kann, untergebracht sind. Auf das Handteil 1 sind verschiedene Aufsteckbürsten 2 stirnseitig aufsetzbar. Mittels einer Kupplung 3 kann die Aufsteckbürste 2 mechanisch an das Handteil 1 angekuppelt werden, um die Antriebsbewegung des Elektromotors auf den Bürstenkopf 4 der Aufsteckbürste 2 zu übertragen. Die Kupplung 3 umfaßt einerseits eine formschlüssige Festlegung des Putzwerkzeugkorpus an sich, sowie andererseits eine Antriebskupplung, die die Antriebsbewegung des Antriebs auf den Borstenkopf der Aufsteckbürste überträgt. Aus dem Handteil 1 ragt stirnseitig eine Antriebswelle 28, die vom Antriebsmotor 23 über ein Getriebe 29 in an sich ebenfalls bekannter Weise antreibbar ist. Die Antriebswelle 28 besitzt einen Kupplungsabschnitt 30, auf den eine in dem Putzwerkzeug 2 angeordnete Antriebswelle mit einem komplementären Kupplungsabschnitt formschlüssig aufsetzbar ist, so daß die Antriebsbewegung übertragen und der Borstenkopf 31 der Aufsteckbürste oszillierend antreibbar ist.

Um die jeweils aufgesteckte Aufsteckbürste 2 zu erkennen, ist am Handteil eine Codierungs-Erfassungseinrichtung 5 vorgesehen.

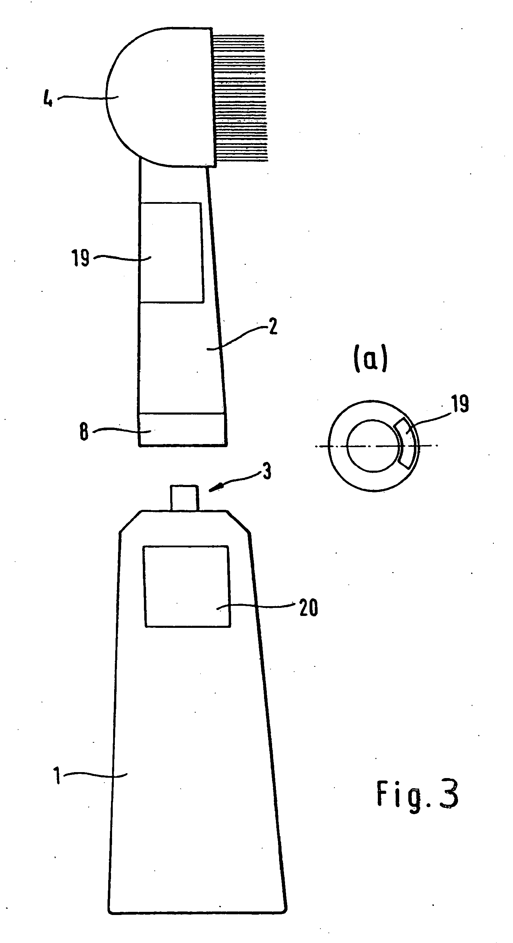

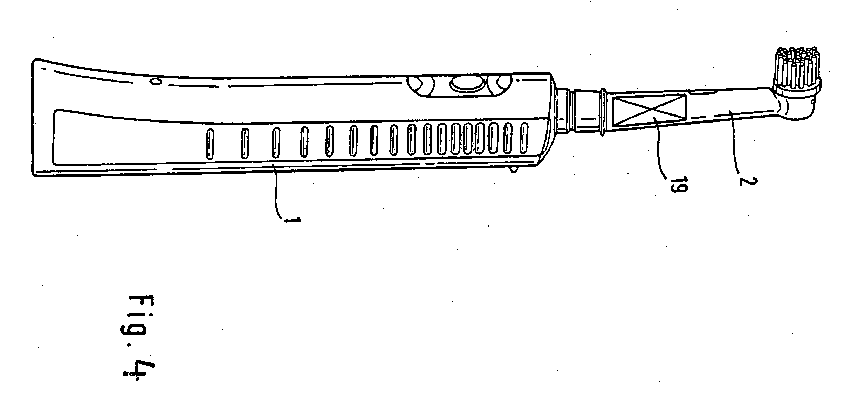

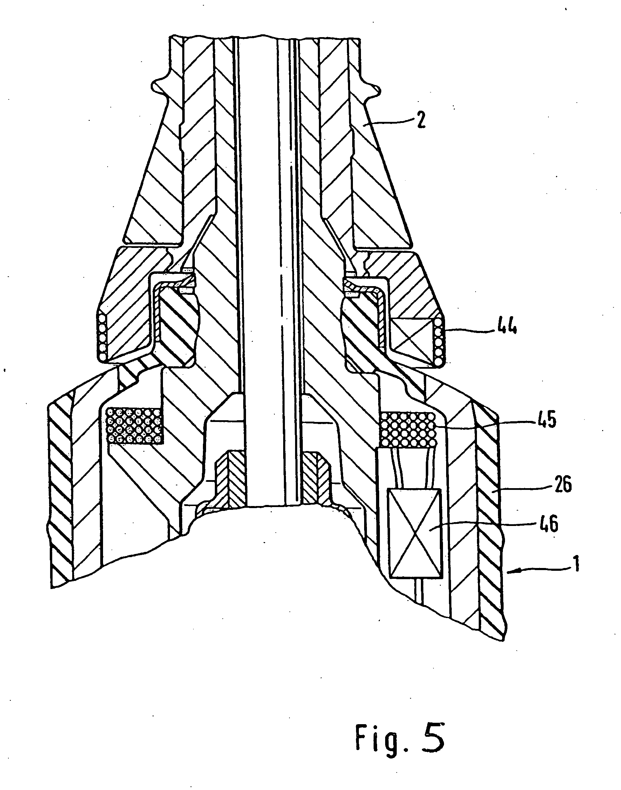

Figuren 3 bis 5 zeigen ein Ausführungsbeispiel einer elektrischen Zahnbürste, bei der die jeweilige Aufsteckbürste 2 über Funksignale erfaßt bzw. bestimmt wird. Die Aufsteckbürste 2 ist mit einem Transponder 19 versehen, der in Form eines Etiketts als sogenanntes Smartlabel auf die Aufsteckbürste 2 aufgeklebt sein kann. Der Transponder 19 kann vorteilhafterweise auch in dem farbigen Aufsteckring 8 an der Stirnseite der Aufsteckbürste 2 enthalten sein (vgl. Figuren 3 und 5). In dem Handteil 1 ist ein auf den Transponder 19 abgestimmter Detektor 20 vorgesehen, der sowohl als Signalsender als auch als Signalempfänger dient.

Der Detektor 20 im Handteil 1 sendet zunächst über die Spule 45 elektromagnetische Wellen zu der mit dem Transponder 19 verbundenen Spule 44 aus, um den Transponder 19 bzw. dessen Mikrochip mit Energie zu versorgen. Dieser speichert die Energie und sendet eine spezifische Kennung an den Detektor 20 zurück, der diese aufnimmt, mittels seiner Auswerteelektronik 46 identifiziert und ein entsprechendes Signal an die Steuereinrichtung 27 des Handteils 1 abgibt. Die Spulen 44 und 45 dienen also jeweils sowohl als Sende- als auch als Empfangsteil. Sie sind einander gegenüberliegend jeweils an den Stirnseiten der Aufsteckbürste 2 bzw. des Handteils 1 angeordnet (vgl. Fig. 5). Aufgrund der von dem Transponder 19 zurückgesandten Kennung kann die Aufsteckbürste 2 und damit der zugehörige Benutzer identifiziert werden.

## Patentansprüche

1. Handteil (1) einer elektrischen Zahnputzvorrichtung (1, 2), mit einem Kupplungsteil zur Ankupplung von Putzwerkzeugen (2), insbesondere Aufsatzbürsten, sowie einem Antrieb (23) zum Antreiben des jeweils angekuppelten Putzwerkzeugs, wobei eine Codierungs-Erfassungseinrichtung (5) zur Erfassung einer Codierung des jeweils an dem Handteil befindlichen Putzwerkzeugs (2) vorgesehen ist, **dadurch gekennzeichnet, daß** das Handteil (1) eine Steuereinrichtung (27) zur Steuerung zumindest eines Zahnreinigungsparameters der Zahnputzvorrichtung in Abhängigkeit der erfaßten Codierung und eine Spule (45) aufweist, die als Sende- und Empfangsteil dient.

2. Handteil (1) nach Anspruch 1, **dadurch gekennzeichnet, daß** die Steuereinrichtung (27) Steuermittel zur Steuerung von Betriebsparametern der Zahnputzvorrichtung, insbesondere Putzfrequenz, -geschwindigkeit, -zeit und/oder Anpressdruck bzw. Anpreßdruckschwellwert bzw. -sollwertbereich, in Abhängigkeit der erfassten Codierung aufweist.

3. Handteil (1) nach Anspruch 1 oder 2, **dadurch gekennzeichnet, daß** die Codierungs-Erfassungseinrichtung (5) berührungslos arbeitend ausgebildet ist.

4. Handteil (1) nach einem der vorhergehenden Ansprüche, **dadurch gekennzeichnet, daß** die Codierungs-Erfassungseinrichtung (5) eine elektrische oder elektromagnetische Erfassungseinrichtung zur Erfassung einer elektrischen oder elektromagnetischen Codierung des jeweils angekoppelten Putzwerkzeugs (2) aufweist.

5. Putzwerkzeug, insbesondere Aufsatzbürste, mit einem Kupplungsteil zum Ankuppeln an ein Handteil (1) bevorzugt nach einem der vorhergehenden Ansprüche 1 bis 4 und mit einer Codierung, **dadurch gekennzeichnet, daß** das Putzwerkzeug (2) einen Transponder (19) und eine Spule (44) aufweist, die als Sende- und Empfangsteil dient und die Codierung reinigungswerkzeugspezifische Daten umfaßt.

6. Putzwerkzeug nach Anspruch 5, **dadurch gekennzeichnet, daß** eine Codiereinrichtung den Signalempfänger (19; 14) zum Empfang eines Signals von dem Handteil (1) und den Signalsender (19; 14) zum Senden eines codierten Signals an das Handteil (2) aufweist.

7. Elektrische Zahnputzvorrichtung, insbesondere Zahnbürste, mit einem Handteil (1) nach einem der vorhergehenden Ansprüche 1 bis 4 in Kombination mit einem daran ankuppelbaren Putzwerkzeug (2) nach einem der vorhergehenden Ansprüche 5 bis 6.

## Claims

1. A handle section (1) of an electric dental cleaning device (1, 2), having a coupling section for coupling cleaning tools (2), in particular brush attachments, and further having a drive means 23 for driving the respective attached cleaning tools, wherein provision is made for a coding detection device (5) for detecting a coding of the respective cleaning tool (2) disposed on the handle section, **characterized in that** the handle section (1) includes a control device (27) for controlling at least one tooth cleaning parameter of the dental cleaning device in response to the detected coding, and a coil (45) that functions as both a transmitter and receiver component.

2. The handle section (1) according to claim 1, **characterized in that** the control device (27) has control means for controlling operating parameters of the dental cleaning device, in particular cleaning frequency, cleaning speed, cleaning time, and/or threshold value or desired range of application pressure in response to the detected signal.

3. The handle section (1) according to claim 1 or 2, **characterized in that** the coding detection device (5) is configured to be operatively non-contacting.

4. The handle section (1) according to any one of the preceding claims, **characterized in that** the coding detection device (5) has an electrical or electromagnetic detection device for detecting an electrical or electromagnetic coding of the respectively attached cleaning tool (2).

5. A cleaning tool, in particular a brush attachment, having a coupling section for coupling to a handle section (1) preferably according to any one of the preceding claims 1 to 4, and having a coding, **characterized in that** the cleaning tool (2) includes a transponder (19) and a coil (44), which function as transmitter and receiver components, and **in that** the coding comprises cleaning tool-specific data.

6. The cleaning tool according to claim 5, **characterized in that** a coding device has a signal receiver (19; 14) for receiving a signal from the handle section (1) and a signal transmitter (19; 14) for sending a coded signal to the handle section (2).

7. An electric dental cleaning device, in particular a toothbrush, having a handle section (1) according to any one of the preceding claims 1 to 4 in combination with a cleaning tool (2) attachable thereto according to any one of the preceding claims 5 to 6.

## Revendications

1. Manche (1) d'un dispositif de brossage des dents (1, 2), comportant un raccord pour le raccordement d'outils de nettoyage (2), notamment de brossettes, ainsi qu'un moteur (23) pour l'entraînement de l'outil de nettoyage raccordé, pourvu d'un dispositif d'identification de codage (5) permettant l'identification d'un codage de l'outil de nettoyage (2) respectivement raccordé au manche, et **caractérisé en ce que** le manche (1) dispose d'un dispositif de commande (27) pour la commande d'au moins un paramètre de nettoyage des dents du dispositif de nettoyage des dents en fonction du codage identifié, et d'une bobine (45) servant d'émetteur et de récepteur.

2. Manche (1) selon revendication 1, **caractérisé en ce que** le dispositif de commande (27) sert de contrôle des paramètres de fonctionnement du dispositif de brossage des dents, notamment la fréquence, la vitesse et le temps de brossage et/ou la force de pression, la valeur de seuil ou l'échelle de consigne de cette force de pression, en fonction du codage identifié.

3. Manche (1) selon revendication 1 ou 2, **caractérisé en ce que** le dispositif d'identification de codage (5) est conçu pour fonctionner sans contact.

4. Manche (1) selon l'une des revendications ci-dessus, **caractérisé en ce que** le dispositif d'identification de codage (5) comporte un dispositif d'identification électrique ou électromagnétique permettant l'identification d'un codage électrique ou électromagnétique provenant de l'outil de nettoyage (2) respectivement raccordé.

5. Outil de nettoyage, notamment brossette, comportant un raccord pour le raccordement au manche (1) de préférence selon l'une des revendications 1 à 4 ci-dessus et un codage, **caractérisé en ce que** l'outil de nettoyage (2) présente un transpondeur (19) et une bobine (44) servant d'émetteur-récepteur et contenant le codage de données spécifiques à l'outil de nettoyage.

6. Outil de nettoyage selon revendication 5, **caractérisé en ce qu'**un dispositif de codage comporte le récepteur de signal (19; 14) pouvant recevoir un signal du manche (1) et l'émetteur de signal (19; 14) pouvant émettre un signal codé au manche (2).

7. Dispositif de nettoyage des dents électrique, notamment brosse à dents, avec un manche (1) selon l'une des revendications 1 à 4 ci-dessus, combiné avec un outil de nettoyage (2) selon l'une des revendications 5 à 6 ci-dessus, pouvant y être raccordé.
